# EUROPÄISCHE PATENTSCHRIFT

(11) **EP 2 030 817 B1**
(45) Veröffentlichungstag und Bekanntmachung des Hinweises auf die Patenterteilung: **29.06.2011**
(21) Anmeldenummer: 08162540.2
(22) Anmeldetag: 18.08.2008
(51) Int. Cl.: B60H 1/00

(54) **Vorrichtung zur Einstellung von einzelnen Zonen eines Fahrgastraumes eines Fahrzeuges zugeordneten Betriebsparametern, insbesondere einer Fahrzeugklimaanlage**
Device for adjusting individual operational parameters assigned to zones of a passenger area of a vehicle, in particular for a vehicle air conditioning unit
Dispositif de réglage de paramètres de fonctionnement attribués à des zones individuelles d'un espace passager de véhicule, en particulier pour un climatiseur de véhicule

(30) Priorität: 29.08.2007 DE 102007040772
(43) Veröffentlichungstag der Anmeldung: 04.03.2009
(73) Patentinhaber: Behr-Hella Thermocontrol GmbH, 70190 Stuttgart (DE)
(72) Erfinder: Knittel, Otto, 59494, Soest (DE); Trapp, Dr. Ralph, 33102, Paderborn (DE)
(74) Vertreter: von Kreisler Selting Werner

(56) Entgegenhaltungen:
- DE-A1- 19 753 864
- US-A1- 2004 089 006
- US-A1- 2005 267 646

## Beschreibung

Die Erfindung betrifft eine Vorrichtung zur Einstellung von einzelnen Zonen eines Fahrgastraumes eines Fahrzeuges zugeordneten Betriebsparametern, insbesondere einer Fahrzeugklimaanlage.

Innenraumtemperatur-Regelungen in Form von Klimaanlagen für Fahrzeuge sind grundsätzlich bekannt. Bei komfortableren Innenraumtemperatur-Regelungen ist es möglich, für unterschiedliche Zonen des Fahrgastraumes, wie beispielsweise für de Fahrer- oder Beifahrerseite verschiedenen Innenraumtemperatur-Sollwerte vorzugeben. Auch sind Fahrzeug-Klimaanlagen mit sogenannten Vier-Quadranten-Regelungen bekannt.

Die manuelle Vorgabe eines Innenraumtemperatur-Sollwerts erfolgt im Regelfall über Bedienelemente wie einen Drehknopf oder Tasten. Eine Klimaanlage mit der Möglichkeit der Sollwertvorgabe für unterschiedliche Zonen verfügt demzufolge über mehrere derartige Bedienelemente, was den gerätetechnischen Kostenanteil der Klimaanlage erhöht.

Ähnliches gilt auch ganz allgemein für die zonenspezifische Einstellung von Betriebsparametern für den Fahrgastraum eines Fahrzeuges, wie beispielsweise Sitzheizung/-lüftung oder Belüftung einer Zone mit Frisch- oder Umluft.

Das Dokument US 2005/0267646 wird als nächstliegender Stand der Technik angesehen. Es offenbart eine Vorrichtung zur Einstellung von einzelnen Zonen eines Fahrgastraums eines Fahrzeugs zugeordneten Betriebsparametern, wobei mehrere Bedienelementen für den unterschiedliechen Zonen genützt werden.

Aufgabe der Erfindung ist es, eine Vorrichtung zur Regelung der Innenraumtemperatur in dem Fahrgastraum eines Fahrzeuges zu schaffen, die trotz der Möglichkeit, die Innenraumtemperatur-Sollwerte für unterschiedliche Zonen vorzugeben, über lediglich ein Bedienelement zur Vorgabe der Innenraumtemperatur-Sollwerte oder eines anderen zonenspezifischen, insbesondere klimatisierungsrelevanten Betriebsparameters verfügt.

Zur Lösung dieser Aufgabe wird mit der Erfindung eine Vorrichtung zur Einstellung von einzelnen Zonen eines Fahrgastraums eines Fahrzeuges zugeordneten Betriebsparametern insbesondere einer Fahrzeug-Klimaanlage vorgeschlagen, wobei die Vorrichtung versehen ist mit
- einem Bedienelement zum Einstellen eines Betriebsparameters selektiv für eine der Zonen des Fahrgastraumes,
- einer Kamera zur Erfassung zumindest eines Teilbereiches des Fahrgastraumes, der zumindest Teile der Zonen des Fahrgastraumes umfasst, und
- einer mit der Kamera verbundenen Bildauswerteeinheit zur Ermittlung durch Gestenauswertung, für welche Zone des Fahrgastraumes ein Fahrgast durch Betätigung des Bedienelementes einen Betriebsparameter einstellt.

Als zonenspezifische Parameter der erfindungsgemäßen Vorrichtung lassen sich insbesondere die Soll-Innenraumtemperatur einer Fahrzeug-Klimaanlage und/oder die Belüftung und/oder eine Sitzheizung bzw. -lüftung über ein oder mehrere Bedienelemente einstellen.

Bei einer vorteilhaften Ausgestaltung der Erfindung ist in der Bildauswerteeinheit anhand von sich bewegenden, Wärmestrahlung abgebenden Flächen ermittelbar, für welche Zone des Fahrgastraumes die Einstellung des Betriebsparameters erfolgt.

Ferner wird zur Lösung der obigen Aufgabe mit der Erfindung eine Vorrichtung zur Regelung der Innenraumtemperatur in dem Fahrgastraum eines Fahrzeuges unter Verwendung einer Vorrichtung zur Einstellung eines zonenspezifischen Innenraumtemperatur-Sollwerts gemäß der oben beschriebenen Art vorgeschlagen, wobei die Innenraumtemperatur-Regelungsvorrichtung versehen ist mit
- einem Bedienelement zur Vorgabe von Innenraumtemperatur-Sollwerten für einzelne Zonen des Fahrgastraums,
- einem Sensor zur Temperaturerfassung,
- einem Innenraumtemperatur-Regler,
- einer Kamera zur Erfassung zumindest eines Teilbereichs des Fahrgastraums, der zumindest Teile der Zonen des Fahrgastraums umfasst, und
- einer Bildauswerteeinheit zur Ermittlung durch Gestenauswertung, für welche Zone des Fahrgastraums ein Fahrgast durch Betätigung des Bedienelements einen Innenraumtemperatur-Sollwert einstellt.

Bei der erfindungsgemäßen Vorrichtung wird mit Hilfe einer Kamera erkannt, für welche Zone des Fahrgastraums ein Fahrgast durch Betätigung des Bedienelements einen Innenraumtemperatur-Sollwert einstellt. Durch diese Kamera ist es möglich, lediglich ein einziges Bedienelement für mehrere unterschiedliche Zonen des Fahrgastraumes zur Vorgabe der Innenraumtemperatur-Sollwerte für diese unterschiedlichen Zonen vorzusehen.

Kameras beispielsweise in Form von CMOS-Kameras werden in zunehmendem Maße im Kraftfahrzeug-Bereich eingesetzt. Dabei existieren auch Konzepte, bei denen der Fahrgastraum eines Fahrzeuges mit Hilfe einer Kamera, die beispielsweise im Rückspiegel oder auf der Instrumententafel bzw. in dieser angeordnet ist, zu erfassen. Mit derartigen Systemen soll beispielsweise erkannt werden, ob der Fahrer ermüdet. Dies wird beispielsweise am Lidschlag der Augen erkannt. Die Kameras verfügen also über Bildauswerteeinheiten.

Erfindungsgemäß wird nun ein derartiges Konzept dazu verwendet, um Gesten zu erkennen. So lassen sich beispielsweise Hand- oder Armbewegungen oder auch das Vorbeugen von Oberkörpern in Richtung der Bedieneinheit einer Klimaanlage erfassen, um daraus ermitteln zu können, für welche Zone des Fahrgastraums ein Fahrgast durch Betätigung des Bedienelements einen Innenraumtemperatur-Sollwert einstellt.

Wie bereits oben erwähnt, können zur Realisierung des erfindungsgemäßen Konzeptes die im Automotive-Bereich bereits bekannten Fahrzeug-Kameras eingesetzt werden. Wesentlich vorteilhafter ist es allerdings, wenn als Kamera eine IR-Kamera (Infrarot-Kamera) verwendet wird, die eine Vielzahl von in Array-Form (beispielsweise in Zeilenform und vorzugsweise in Form einer zweidimensionalen Matrixform) angeordneten IR-Sensoren zur Erzeugung eines Wärmebildes zumindest eines Teils des Fahrgastraums aufweist. Eine derartige IR-Kamera kann dann auch die Funktion eines Temperatursensors, wie er als Istwertgeber bei Fahrzeug-Klimaanlagen erforderlich ist, übernehmen. Damit kann bei Einsatz einer IR-Kamera auf den konventionellen Innenraumtemperatursensor verzichtet werden.

Bei Einsatz einer IR-Kamera für die Innenraumtemperatur-Regelung werden Oberflächentemperaturen im Fahrzeug wie beispielsweise Seitenverkleidungen, Polster, Scheibenflächen, Dachhimmel o.dgl. erfasst. Die von diesen Flächen ausgehenden Wärmestrahlungen sind ein Maß für die Behaglichkeit, wie sie von den Insassen des Fahrzeuges empfunden wird. Vorteilhaft ist es, das durch die IR-Kamera erfasste Temperaturprofil des Innenraums (inklusive der Oberflächentemperaturprofile der Insassen) auf einem insbesondere farbigen Bildschirm anzuzeigen (Thermographie), und zwar symbolisiert, stilisiert, als "Echt"-Wärmebild und/oder mit Temperaturskala, wobei unterschiedlichen Temperaturen unterschiedliche Farben zugeordnet sind. So können die Insassen z.B. beobachten, wie sich z.B. ihre durch Sonneneinstrahlung erwärmten Schulterpartien durch die Innenraumtemperatur- und Behaglichkeitsregelung (Anströmung durch kühle Luft) im Laufe der Zeit wieder abkühlen.

Die Verwendung einer IR-Kamera macht es überdies möglich, auf den bei komfortablen Innenraumtemperatur-Regelungen vorhandenen Sonnensensor zu verzichten. Mit Hilfe eines solchen Sonnensensors kann die Intensität und die Richtung der Sonnenstrahlung erfasst werden, um dadurch die Auswirkungen der Sonnenstrahlung auf die Erwärmung des Fahrgastraums zu ermitteln. Mit Hilfe einer IR-Kamera lässt sich nun der Einfluss der Sonnenstrahlung auf die Erwärmung im Fahrgastraum direkt ermitteln, indem die Temperaturen unterschiedlicher Flächen im Erfassungsbereich der IR-Kamera ermittelt werden, um daraus ein "Sonnensignal" zu erzeugen. So lässt sich beispielsweise mit einer IR-Kamera sehr einfach und genau feststellen, wenn die Sonne auf eine Seite des Fahrzeuges auftritt. Die der Sonneneinstrahlung zugewandten Flächen erwärmen sich dabei und strahlen somit eine höhere Wärmestrahlung ab, als beispielsweise die nicht direkt beschienenen Flächen im Fahrgastinnenraum.

Wird also Für die Gestenerkennung, mit der ermittelt wird, für welche Zone des Fahrgastraums ein Fahrgast durch Betätigung des Bedienelements einen Innenraumtemperatur-Sollwert einstellt, statt einer Kamera, die Licht im sichtbaren Wellenlängenbereich erfasst, eine IR-Kamera zur Erzeugung eines Wärmebilds verwendet, so kann sowohl auf den Innenraumtemperatursensor als auch auf den Sonnensensor der Klimaanlage verzichtet werden. Sämtliche Funktionen werden von der IR-Kamera realisiert. Neben dem Bauteileaufwand reduziert sich dabei auch der Verdrahtungsaufwand, da nur noch ein einziger Sensor (nämlich die IR-Kamera) mit der Elektronik der Klimaanlage elektrisch verbunden werden muss.

Die Innenraumtemperatur-Erfassung mit Hilfe einer IR-Kamera erfolgt zweckmäßigerweise anhand der von der IR-Kamera erfassten Strahlungstemperaturen der im wesentlichen unbeweglichen bzw. unbewegten Flächen. Damit werden also die quasi statischen Signale, die die IR-Kamera empfängt, für die Ermittlung der Innenraumtemperatur genutzt. Somit bleiben dynamische Signale, wie sie beispielsweise im IR-Kamerabild infolge einer Handbewegung erscheinen, nicht für die Innenraumtemperatur-Bestimmung bzw. für die Innenraumtemperatur-Regelung genutzt. Diese dynamischen Signale, die relativ einfach und zuverlässig von den quasi statischen Signale determiniert werden können, können dann für die Ermittlung der Fahrer-/Beifahrer-Einstellung des Innenraumtemperatur-Sollwerts oder, allgemein, dafür genutzt werden, um bestimmen zu können, für welche Zone des Fahrgastraums die Einstellung des Innenraumtemperatur-Sollwerts erfolgt.

Unabhängig von der Art und Weise der Kamera ist es ferner zweckmäßig, wenn über ein Anzeigeelement angezeigt wird, für welche Zone des Fahrgastraums die Einstellung des Innenraumtemperatur-Sollwerts erfolgt.

Ganz allgemein betrifft die Erfindung also eine Vorrichtung zur Einstellung von einzelnen Zonen eines Fahrgastraumes eines Fahrzeuges zugeordneten Betriebsparametern, insbesondere einer Fahrzeugklimaanlage, wobei die Vorrichtung versehen ist mit
- einem Bedienelement zum Einstellen eines Betriebsparameters selektiv für eine der Zonen des Fahrgastraumes,
- einer Kamera zur Erfassung zumindest eines Teilbereiches des Fahrgastraumes, der zumindest Teile der Zonen des Fahrgastraumes umfasst, und
- einer mit der Kamera verbundenen Bildauswerteeinheit zur Ermittlung durch Gestenauswertung, für welche Zone des Fahrgastraumes ein Fahrgast durch Betätigung des Bedienelementes einen Betriebsparameter einstellt.

Als Betriebsparameter für die einzelnen Zonen kommen insbesondere die Innenraumtemperatur-Sollwerte, die Intensität der Belüftung mit Frisch- oder Umluft und/oder die Einstellung einer Sitzheizung bzw. -lüftung über ein oder mehrere Bedienelemente in Frage.

Die Detektion, für welche Zone des Fahrgastraumes die Einstellung eines Betriebsparameters vorgenommen wird, erfolgt zweckmäßigerweise in der Bildauswerteeinheit anhand von sich bewegenden, Wärmestrahlung abgebenden Flächen.

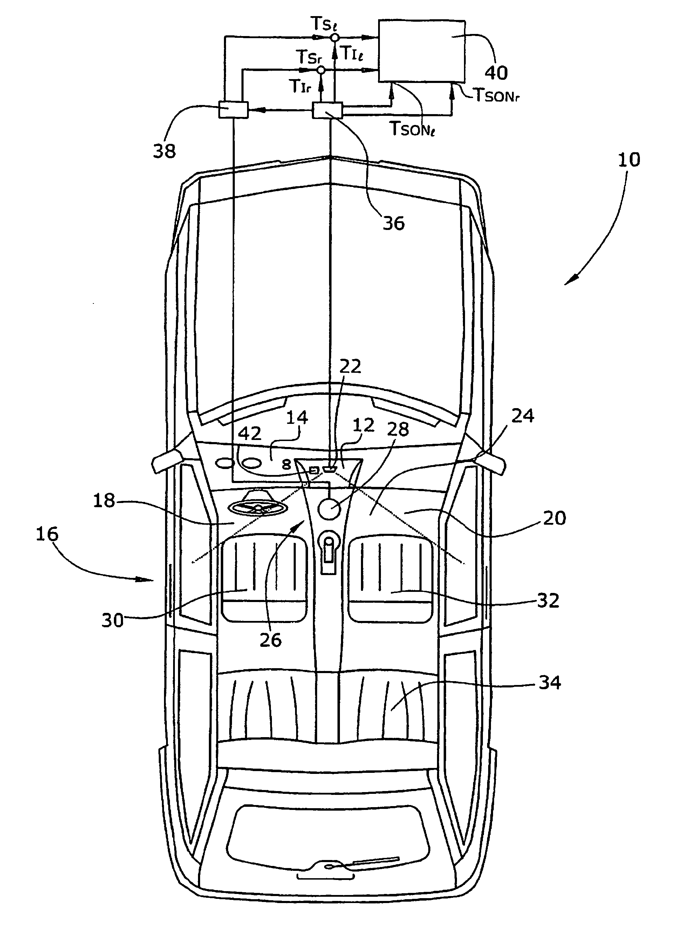

Die Erfindung wird nachfolgend anhand der Zeichnung und unter Bezugnahme auf ein Ausführungsbeispiel der Erfindung näher erläutert. In der Zeichnung ist ein Fahrzeug von oben dargestellt, um die für die Erfindung wesentlichen Teile des Fahrgastraums zu zeigen.

Das in der Zeichnung gezeigte Fahrzeug 10 verfügt über eine Klimaanlage mit Steuergerät 12, welches in der Instrumententafel 14 des Fahrzeuges 10 angeordnet ist. Der Fahrgastraum 16 kann gedanklich in die Fahrerseite 18 und in die Beifahrerseite 20 unterteilt werden. Innerhalb des Fahrgastraums 16 befindet sich eine IR-Kamera 22, die in diesem Ausführungsbeispiel in das Steuergerät 12 integriert ist. Die IR-Kamera 22 weist einen Erfassungsbereich 24 auf, der zumindest Teile der Fahrerseite 18 und der Beifahrerseite 20 umfasst. Im Erfassungsbereich 24 der IR-Kamera 22 befindet sich unter anderem auch ein Bedienelement 26 in Form eines Einstellknopfes 28, der vom Fahrer und vom Beifahrer bedient werden kann. Auch die vorderen Sitze (Fahrersitz 30 und Beifahrersitz 32) sowie die rückwärtige Sitzbank 34 befinden sich innerhalb des Erfassungsbereichs 24 der IR-Kamera 22, die darüber hinaus auch noch diverse an den Fahrgastraum 16 angrenzende und diesen definierende Innenflächen erfasst.

Erfindungsgemäß wird nun durch Auswertung des IR-Kamerabildes (Wärmebildes) erkannt, ob eine gerade durch Betätigung des Bedienelements 26 vorgenommene Sollwerttemperatur-Einstellung für die Fahrerseite 18 (T_{Si}) oder die Beifahrerseite 20 (T_{Sr}) gilt. So lässt sich also beispielsweise die Bewegung der Hand des Fahrers eindeutig von der Bewegung der Hand des Beifahrers unterscheiden. Damit ist es also möglich, mit Hilfe des einzigen Bedienelements 26 für die Innenraumtemperatur-Sollwerte Vorgaben bezüglich der Innenraumtemperatur-Sollwerte T_{Sl}, T_{Sr} sowohl für die Fahrerseite 18 (T_{Sl}) als auch für die Beifahrerseite 20 (T_{Sr}) zu machen. Die Signale der IR-Kamera 22 werden einer Bildauswerteeinheit 36 zugeführt, in der die obige Gestenerkennung erfolgt und über eine mit dem Bedienelement 26 gekoppelte Einheit 38 der eingestellte Wert als Sollwert für die Fahrerseite 18 oder die Beifahrerseite 20 betrachtet wird. Beide Sollwerte werden getrennt (unter Berücksichtigung der Innenraumtemperatur) einem Innenraum-Temperaturregler 40 zugeführt.

Die IR-Kamera 22 wird aber bei diesem Ausführungsbeispiel der Fahrzeug-Klimaanlage auch als Sensor für die Innenraumtemperatur des Fahrzeuges 10 verwendet. Im Erfassungsbereich 24 der IR-Kamera 22 befinden sich diverse Oberflächen, zu denen unter anderem auch die Körperoberflächen des Fahrers bzw. des Beifahrers (sofern dieser vorhanden ist) gehören. Dadurch, dass die IR-Kamera 22 aus einer Vielzahl von IR-Sensoren besteht, die in Array- oder Matrix-Form angeordnet sind, kann eine Auflösung des Wärmebildes erfolgen. Mit anderen Worten können also im Wärmebild der IR-Kamera 22 voneinander verschiedene Temperaturen abstrahlende Flächen unterschieden und/oder ermittelt werden. Anhand dieser unterschiedlichen temperierten Flächen kann dann an den Regler der Kfz-Klimaanlage ein Wert bzw. eine Wertemenge gegeben werden, der/die als Istwerte für die Fahrerseite 18 (T_{Il}) und für die Beifahrerseite 20 (T_{Ir}) für die Innenraumtemperatur-Regelung genutzt wird/werden.

Die verschiedenen im IR-Kamerabild erkennbaren, unterschiedlich temperierten Flächen können des weiteren dazu genutzt werden, um die Einflüsse der Sonnenstrahlung auf die Erwärmung der unterschiedlichen Flächen zu detektieren. Auch diese Werte und Informationen gehen in die Innenraumtemperatur-Regelung ein (in diesem Fall als Störgrößen T_{SONl}, T_{SONr}).

Durch den Einsatz der IR-Kamera 22 lassen sich also sowohl der Innenraumtemperatur-Sensor als auch der Sonnensensor einer konventionellen Kfz-Klimaanlage kompensieren. Derartiger Sensoren bedarf es bei der erfindungsgemäßen Klimaanlage also nicht mehr.

Bei dem hier beschriebenen Ausführungsbeispiel weist das Steuergerät 12 der Kfz-Klimaanlage des weiteren ein Anzeigeelement bzw. eine Anzeige 42 auf, an dem/der optisch darstellbar ist, für welche Zone (Fahrerseite 18 oder Beifahrerseite 20) eine gerade vorgenommene Innenraumtemperatur-Sollwerteinstellung erfolgt. Außerdem wird auf dieser Anzeige 42 oder einem anderen Bildschirm in/an der Instrumententafel das Wärmebild des Fahrgastraumes 16 farbig dargestellt.

Für die Gestenerkennung werden dynamische Signale der IR-Kamera 22 verwendet. Wenn man einmal davon ausgeht, dass sich die Temperatur der im Erfassungsbereich 24 der IR-Kamera 22 liegenden Flächen nur relativ langsam verändern, so können sich schnell verändernde Signale des IR-Wärmebildes als sich bewegende Hände, Arme o.dgl. interpretiert werden. Die dynamischen Signale dienen dann also der Erkennung, für welche Zone (Fahrerseite 18 oder Beifahrerseite 20) gerade eine Veränderung des Innenraumtemperatur-Sollwertes über das Bedienelement 26 erfolgt.

### BEZUGSZEICHENLISTE

- 10: Fahrzeug
- 12: Steuergerät
- 14: Instrumententafel
- 16: Fahrgastraum
- 18: Fahrerseite
- 20: Beifahrerseite
- 22: IR-Kamera
- 24: Erfassungsbereich der IR-Kamera
- 26: Bedienelement
- 28: Einstellknopf
- 34: Sitzbank
- 36: Bildauswerteeinheit
- 38: Umschalteinheit
- 40: Innenraumtemperatur-Regler
- 42: Anzeige

## Patentansprüche

1. Vorrichtung zur Einstellung von einzelnen Zonen eines Fahrgastraums eines Fahrzeuges zugeordneten Betriebsparametern, insbesondere einer Fahrzeugklimaanlage, mit
- einem Bedienelement (26) zum Einstellen eines Betriebsparameters selektiv für eine der Zonen (18,20) des Fahrgastraumes (16),
- einer Kamera (22) zur Erfassung zumindest eines Teilbereiches des Fahrgastraumes (16), der zumindest Teile der Zonen (18,20) des Fahrgastraumes (16) umfasst, und
- einer mit der Kamera (22) verbundenen Bildauswerteeinheit (36) zur Ermittlung durch Gestenauswertung, für welche Zone (18,20) des Fahrgastraumes (16) ein Fahrgast durch Betätigung des Bedienelementes (26) einen Betriebsparameter einstellt,

2. Vorrichtung nach Anspruch 1, **dadurch gekennzeichnet, dass** als zonenspezifische Parameter die Soll-Innenraumtemperatur, die Belüftung und/oder eine Sitzheizung bzw. -lüftung über ein oder mehrere Bedienelemente (26) einstellbar sind.

3. Vorrichtung nach Anspruch 1 oder 2, **dadurch gekennzeichnet, dass** in der Bildauswerteeinheit (36) anhand von sich bewegenden, Wärmestrahlung abgebenden Flächen ermittelbar ist, für welche Zone (18,20) des Fahrgastraumes (16) die Einstellung des Betriebsparameters erfolgt.

4. Vorrichtung zur Regelung der Innenraumtemperatur in dem Fahrgastraum eines Fahrzeuges unter Verwendung einer Vorrichtung nach einem der vorhergehenden Ansprüche zur Einstellung eines zonenspezifischen Innenraumtemperatur-Sollwerts, mit
- einem Bedienelement (26) zur Vorgabe von Innenraumtemperatur-Sollwerten für einzelne Zonen (18,20) des Fahrgastraums (16),
- einem Sensor zur Temperaturerfassung,
- einem Innenraumtemperatur-Regler (40),
- einer Kamera (22) zur Erfassung zumindest eines Teilbereichs des Fahrgastraums (16), der zumindest Teile der Zonen (18,20) des Fahrgastraums (16) umfasst, und
- einer Bildauswerteeinheit (36) zur Ermittlung durch Gestenauswertung, für welche Zone (18,20) des Fahrgastraums (16) ein Fahrgast durch Betätigung des Bedienelements (26) einen Innenraumtemperatur-Sollwert einstellt.

5. Vorrichtung nach Anspruch 4, **gekennzeichnet durch** ein Anzeige (42) zur Anzeige, für welche Zone (18,20) des Fahrgastraums (16) die Einstellung des Innenraumtemperatur-Sollwerts erfolgt.

6. Vorrichtung nach Anspruch 4 oder 5, **dadurch gekennzeichnet, dass** die Kamera als eine IR-Kamera (22) mit einer Vielzahl von in Array-Form angeordneten IR-Sensoren zur Erzeugung eines Wärmebildes ausgebildet ist.

7. Vorrichtung nach Anspruch 6, **dadurch gekennzeichnet, dass** der Sensor zur Temperaturerfassung als die IR-Kamera (22) zur Erfassung von Oberflächentemperaturen ausgebildet ist.

8. Vorrichtung nach Anspruch 6 oder 7, **dadurch gekennzeichnet, dass** in der Bildauswerteeinheit anhand der Temperaturen unterschiedlicher Flächen im Erfassungsbereich (24) der IR-Kamera (22) der Einfluss der Sonnenstrahlung auf die Erwärmung im Fahrgastraum (16) ermittelbar ist und diese Information in den Innenraumtemperatur-Regler (40) eingeht.

9. Vorrichtung nach einem der Ansprüche 6 bis 8, **dadurch gekennzeichnet, dass** in der Bildauswerteeinheit (36) anhand von sich bewegenden Wärmestrahlung abgebenden Flächen ermittelbar ist, für welche Zone (18,20) des Fahrgastraums (16) die Einstellung des Innenraumtemperatur-Sollwerts erfolgt.

10. Vorrichtung nach einem der Ansprüche 6 bis 9, **dadurch gekennzeichnet, dass** in der Bildauswerteeinheit (36) der Istwert der Innenraumtemperatur anhand der von der IR-Kamera (22) erfassten Strahlungstemperaturen von im wesentlichen unbeweglichen Flächen ermittelbar ist.

11. Vorrichtung nach einem der Ansprüche 6 bis 10, **dadurch gekennzeichnet, dass** das Wärmebild der IR-Kamera (22), insbesondere die Oberflächentemperatur der Fahrgäste und/oder im Bereich um diese herum, an einer Anzeige (42) im Fahrgastraum (16) darstellbar, insbesondere Farbig darstellbarist.

## Claims

1. Device for adjusting operational parameters assigned to individual zones of a passenger compartment of a vehicle, in particular of a vehicle air condition system, comprising
- an operating element (26) for selectively adjusting an operational parameter for one of the zones (18, 20) of the passenger compartment (16),
- a camera (22) for capturing at least a part of the passenger compartment (16) which part comprises at least portions of the zones (18, 20) of the passenger compartment (16), and
- an image evaluation unit (36), connected to said camera (22), for determining by the evaluation of gestures for which zone (18,20) of the passenger compartment (16) a passenger adjusts an operational parameter by actuating the operational element (26).

2. Device of claim 1, **characterized in that** the zone-specific parameters adjustable by means of one or a plurality of operational elements (26) are the set interior temperature, the ventilation and/or a seat heating or ventilation.

3. Device of claim 1 or 2, **characterized in that** it is possible in the image evaluation unit (36) to determine from moving surfaces emitting thermal radiation for which zone (18, 20) of the passenger compartment (16) an operational parameter is adjusted.

4. Device for controlling the interior temperature in the passenger compartment of a vehicle using a device of one of the preceding claims for adjusting a zone-specific set value for the interior temperature, comprising
- an operational element (26) for predefining interior temperature set values for individual zones (18, 20) of the passenger compartment (16),
- a sensor for detecting a temperature,
- an interior temperature control (40),
- a camera (22) for capturing at least a part of the passenger compartment (16) which part comprises at least portions of the zones (18, 20) of the passenger compartment (16), and
- an image evaluation unit (36), connected to said camera (22), for determining by the evaluation of gestures for which zone (18,20) of the passenger compartment (16) a passenger adjusts an interior temperature set value by actuating the operational element (26).

5. Device of claim 4, **characterized by** a display (42) for displaying the zone (18, 20) of the passenger compartment (16) for which the interior temperature set value is adjusted.

6. Device of claim 4 or 5, **characterized in that** the camera is configured as an IR camera (22) with a plurality of IR sensors for generating a heat image, said sensors being arranged in an array.

7. Device of claim 6, **characterized in that** the sensor for temperature detection is configured as the IR camera (22) for detecting surface temperatures.

8. Device of claim 6 or 7, **characterized in that**, from the temperatures of different surfaces in the detection area (24) of the IR camera (22), it is possible to determine in the image evaluation unit the influence of solar irradiation on the warming in the passenger compartment (16) and that this information is input into the interior temperature control (40)

9. Device of one of claims 6 to 8, **characterized in that**, from moving surfaces emitting thermal radiation, it is possible to determine in the image evaluation unit (36) for which zone (18, 20) of the passenger compartment (16) the interior temperature set value is adjusted.

10. Device of one of claims 6 to 9, **characterized in that** it is possible to determine in the image evaluation unit (36) the actual value of the interior temperature from the radiation temperatures emitted by substantially immobile surfaces and detected by the IR camera (22).

11. Device of one of claims 6 to 10, **characterized in that** the heat image of the IR camera (22), in particular the surface temperature of the passengers and/or in the area around the same, can be displayed, in particular in color, on a display (42) in the passenger compartment (16).

## Revendications

1. Dispositif de réglage de paramètres de fonctionnement attribués à des zones individuelles d'un espace passager de véhicule, en particulier pour un climatiseur de véhicule, comprenant
- un élément de réglage (26) pour sélectivement ajuster un paramètre de fonctionnement pour une des zones (18, 20) dudit espace passager (16),
- une caméra (22) pour couvrir au moins un partie partielle dudit espace passager (16), qui comprend au moins des parties desdites zones (18, 20) dudit espace passager (16), et
- une unité d'évaluation d'images (36) connectée à ladite caméra (22) pour déterminer par évaluation de gestes pour quelle zone (18, 20) dudit espace passager (16) un passager règle un paramètre de fonctionnement par manipulation dudit élément de réglage (26).

2. Dispositif selon la revendication 1, **caractérisé en ce que** les paramètres spécifiques aux zones réglables par un ou plusieurs éléments de réglage (26) sont la température de consigne intérieure, la ventilation et/ou un chauffage ou une ventilation de siège.

3. Dispositif selon les revendications 1 ou 2, **caractérisé en ce que** l'on peut déterminer, dans ladite unité d'évaluation d'images (36), à l'aide de surfaces qui se déplacent et émettent de la radiation thermique, pour quelles zones (18, 20) dudit espace passager (16) le paramètre de fonctionnement est réglé.

4. Dispositif de réglage de la température intérieure dans l'espace passager d'un véhicule utilisant un dispositif selon l'une quelconque des revendications précédentes pour le réglage d'une valeur de consigne de la température intérieure spécifique à zones, comprenant
- un élément de réglage (26) pour définir des valeurs de consigne de la température intérieure pour des zones individuelles (18, 20) dudit espace passager (16),
- un capteur pour détecter la température,
- un régulateur (40) de la température intérieure,
- une caméra (22) pour couvrir au moins une section dudit espace passager (16) comprenant au moins des parties des zones (18, 20) dudit espace passager (16), et
- une unité d'évaluation d'images (36) connectée à ladite caméra (22) pour déterminer par évaluation de gestes pour quelle zone (18, 20) dudit espace passager (16) un passager règle un paramètre de fonctionnement par manipulation dudit élément de réglage (26).

5. Dispositif selon la revendication 4, **caractérisé par** un affichage (42) pour afficher la zone (18, 20) dudit espace passager (16) pour quelle la valeur de consigne de la température intérieure est réglée.

6. Dispositif selon les revendications 4 ou 5, **caractérisé en ce que** la caméra est une caméra IR (22) avec plusieurs capteurs IR disposés en forme d'un réseau pour générer une image thermique.

7. Dispositif selon la revendication 6, **caractérisé en ce que** ledit capteur pour détecter la température est la caméra IR (22) pour détecter des températures en surface.

8. Dispositif selon les revendications 6 ou 7, **caractérisé en ce que** l'on peut déterminer, dans ladite unité d'évaluation d'images, l'influence du rayonnement solaire sur le réchauffement dudit espace passager (16) à partir des températures de différentes surfaces dans la zone de couverture (24) de ladite caméra IR (22), et que cette information est entrée dans le régulateur (40) de la température intérieure.

9. Dispositif selon l'une quelconque des revendications 6 à 8, **caractérisé en ce que** l'on peut déterminer dans ladite unité d'évaluation d'images (36) à partir de surfaces qui se déplacent et émettent de la radiation thermique, pour quelles zones (18, 20) dudit espace passager (16) la valeur de consigne de la température intérieure est réglée.

10. Dispositif selon l'une quelconque des revendications 6 à 9, **caractérisé en ce que** l'on peut déterminer dans ladite unité d'évaluation d'images (36) la valeur actuelle de la température intérieure à partir des températures de rayonnement de surfaces sensiblement immobiles détectées par la caméra IR (22).

11. Dispositif selon l'une quelconque des revendications 6 à 10, **caractérisé en ce que** l'image thermique de ladite caméra IR (22), notamment la température en surface des passagers et/ou la température autour des passagers, peut être affichée, notamment en couleur, sur un affichage (42) dans l'espace passager (16).
